Europäisches Patentamt

(19) European Patent Office    (11) Publication number:    **0 005 581**

Office européen des brevets    **A1**

(12) **EUROPEAN PATENT APPLICATION**

(21) Application number: 79300407.8    (51) Int. Cl.²: **G 05 D 3/04**
                                     //G21C17/00, G21D5/08

(22) Date of filing: 14.03.79

(30) Priority: 14.04.78 US 896530
28.12.78 US 974159

(43) Date of publication of application:
28.11.79 Bulletin 79/24

(84) Designated Contracting States:
BE CH DE FR GB IT SE

(71) Applicant: WESTINGHOUSE ELECTRIC CORPORATION
Westinghouse Building Gateway Center
Pittsburgh Pennsylvania 15222(US)

(72) Inventor: Gerkey, Kenneth Sylvester
186 Seminole Drive
Pittsburgh Pennsylvania(US)

(72) Inventor: Smith, Edward Henry
Box 205A RD No. 1
New Alexandria Pennsylvania(US)

(72) Inventor: Castner, Raymond Paul
1154 LaSalle Road
Monroeville Pennsylvania(US)

(74) Representative: van Berlyn, Ronald Gilbert, Esq.
23 Centre Heights
London NW3 6JG(GB)

(54) Remotely controlled tool-positioning table and method for its operation.

(57) A remotely operated and monitored tool support and
positioning apparatus for retubing a steam generator
adapted for mounting below the tubesheet of a vertically
standing nuclear steam generator. A tool holding arm
comprises a platform with an opening and a rotatable plate
(50) supported thereon with a vertical hollow shaft (48)
extending downwardly through the opening (28). The lower
surface of said plate (50) has a plurality of cavities (58) evenly
spaced along a circle whose center is the axis of rotation of
said plate (50), and an indexing means including a movable
pin (62) is associated with said platform (24) so as to be
received in said cavities (58), the pin (62) being movable
between a fully retracted position permitting rotation of said
plate (50) and a fully protruding position for indexed seating
within one of said cavities (58) to position said plate (50) in an
exact angular position.

This arrangement facilitates remote positioning of a tool
in limited and radioactive area of a nuclear steam generator
heat for repair work.

./...

FIG. 2

1

REMOTELY CONTROLLED TOOL POSITIONING APPARATUS

This invention relates to apparatus for remotely repairing and replacing the tubes and tubesheet in a nuclear steam generator, and more particularly to a rotatable tool positioning device forming a part of the apparatus for remotely and accurately positioning any of the tools and a method for operating the apparatus.

Copending patent application Serial No.          , (W.E. Case 47,697) of common assignee, discloses a remotely mounted tool support and positioning apparatus for inspecting and repairing the tube and tubesheet of a nuclear steam generator. Generally, this apparatus comprises a horizontally extending tool holder arm cantilevered from a platform which is horizontally movable along a boom and also able to be elevated therefrom. The boom is supported in a manner to permit angular movement in the horizontal plane parallel to the tubesheet. Thus, with the platform being movable radially and vertically and with the boom being movable angularly, a tool disposed in the free or distal end of the tool holder arm can be positioned below any particular point of the tubesheet and then raised into proper relationship for accomplishing whatever operation on the tubes or tubesheet is desired. However, because of the internal configuration of the channel head of the generator in which the boom is supported and also because of the configuration of the support of the boom therein, the length of the boom is limited and the travel of the platform therealong is also limited. Therefore, there are certain tubes, i.e., those

2

closest to the divider plate separating the inlet and outlet side of the tubesheet and those tubes closest to the outer wall of the generator, beneath which the platform cannot be disposed. The tool holder arm provides the necessary extension to permit this proper disposition of the tool beneath such tubes; however, the arm must be extending generally radially outwardly to be disposed beneath the outer tubes and generally radially inwardly to be disposed beneath the tubes along the divider plate. Thus, the tube holder arm is manually releasably attached through well known quick release mechanisms to the platform so that when all the necessary operations are accomplished on the tubes or those portions of the tubesheet which are accessible when it extends outwardly, the arm is manually repositioned to extend inwardly for access to the remaining areas and tubes. Thus, under such conditions, minimal exposure to the inside of the generator is required to manually reset the tool arm.

The above operation is generally descriptive of the procedure when the apparatus and tools are being used to remove the tubes and repair and refurbish the tubesheet. However, for retubing operations within the steam generator, the tubes will be installed one column at a time. This means that for each column that is inserted the tool holder arm will have to be changed from one position (i.e., extending outwardly for access to the outermost tubes of that column) to the other position (i.e., extending inwardly for access to the innermost tubes of that column). As there are on the order of 114 columns of tubes, this would require the tool arm to be repositioned 114 times for each individual operation in the retubing procedure. Further, as there are numerous separate operations each requiring a separate tool, such as installing the tubes to the tubesheet, removing the tube guides, positioning the tube ends flush with the tubesheet, and welding the tubes to the tubesheet, all of which may have to be done as each column or several columns is installed, it is evident that manually repositioning the tool holder arm would require extensive exposure to radiation in the steam generator interior.

It is therefore the principal object of the present invention to provide a tool support arm structure with which access to all areas of the tubesheet is obtained without exposing any operating personnel unduly to radiation.

With this object in view, the present invention resides in a remotely operated and monitored tool support and positioning apparatus for mounting below the tubesheet of a vertically standing nuclear steam generator said apparatus supporting a tool holding arm comprising a platform supported on said tool holding arm and having an upper and a lower surface with an opening extending therethrough, characterized by a rotatable plate supported on said platform with a vertically oriented hollow shaft extending downwardly through the opening in said platform and being rotatably supported within a collar mounted on said platform, the lower surface of said plate having a plurality of downwardly open cavities evenly spaced along a circle whose center is the axis of rotation of said plate, drive means for rotating said plate and position sensing means connected to said plate and responsive to the rotation thereof for generating a signal relative to the angular position of said plate, indexing means including a movable pin disposed within an aperture in said platform so as to be received in said cavities, means for moving said pin between a fully retracted position permitting rotation of said plate and a fully protruding position for indexed seating within one of said cavities to position said plate in an exact angular position, and switches and means for actuating said switches associated with said indexing pin for operating said switches to indicate the position of said movable pin.

Figure 1 is a partial sectional view of a steam generator head with remotely operated apparatus disposed therein for repairing the tubes and tubesheet;

Figure 2 is a partial elevational sectional view of a movable, tool positioning carriage of the apparatus of Figure 1 according to the present invention; and

Figure 3 is a top plan view of Figure 2.

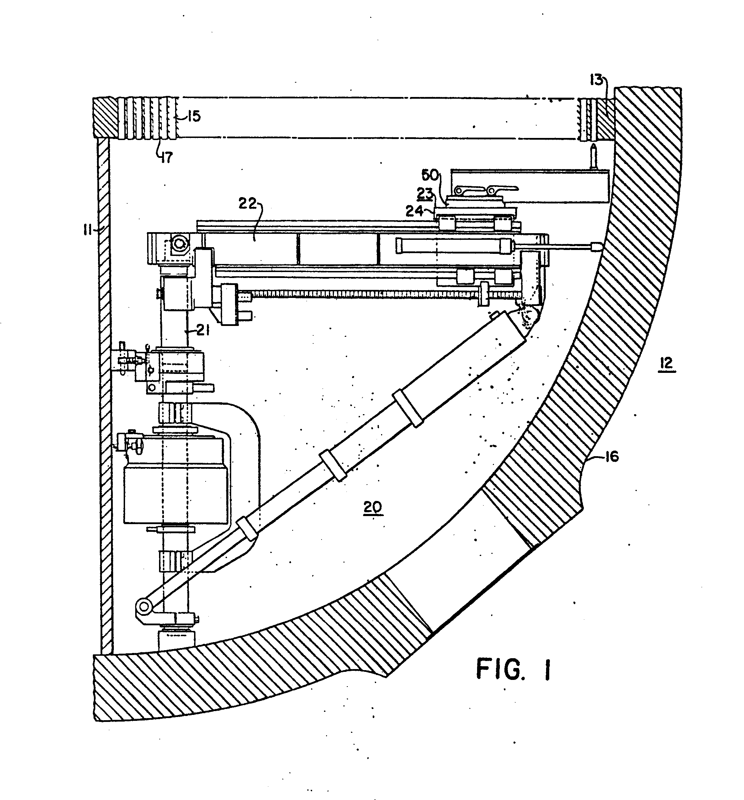

Figure 1 shows a portion of the channel head 10 of a steam generator 12 having· a tubesheet 13 with a plurality of holes 15 therethrough containing the ends of heat exchanger tubes 17. The head is partitioned by a dividing plate 11 into an inlet portion and an outlet portion (only one of such portions being shown) and it is understood that the tubes are generally "U-shaped" with one end opening into the inlet portion and the other into the outlet portion.

Apparatus 20 for repairing the tubes 17 is disposed below the tubesheet 13 with one such apparatus in each portion. The apparatus 20 generally comprises a vertical rotatable column 21 having a horizontally extending boom 22, which, in the operative position, is maintained horizontal, below the tubesheet 13. A carriage 23 is movably mounted on the boom for horizontal travel therealong. The carriage includes a platform 24 mounted for guided vertical movement. However, because of the configuration of the channel head and the limited permitted travel of the carriage, not all of the tubes 17 are accessible from the carriage 23. Thus, a tool holding arm or extension 26 is attached thereto to permit disposition of a tool immediately below the tubes. It is seen that with the tool holder arm 26 mounted to extend outwardly (as seen in Figure 1) the tubes closest to the divider plate are still not accessible. In order for the tool holder to extend inwardly for tool access to such tubes, the movable platform 24 supports a remotely operable rotatable plate 30 on which the tool arm 26 is mounted for automatically positioning the tool arm to extend in either an inwardly or outwardly direction or any intermediate position.

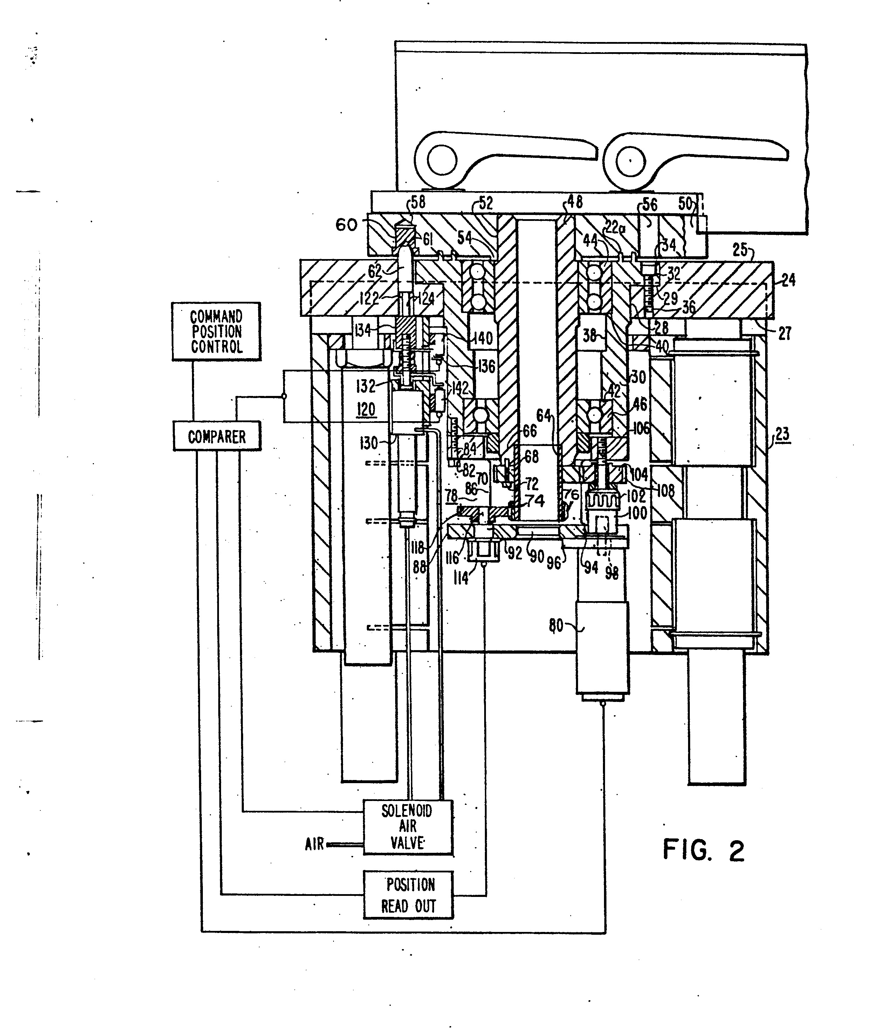

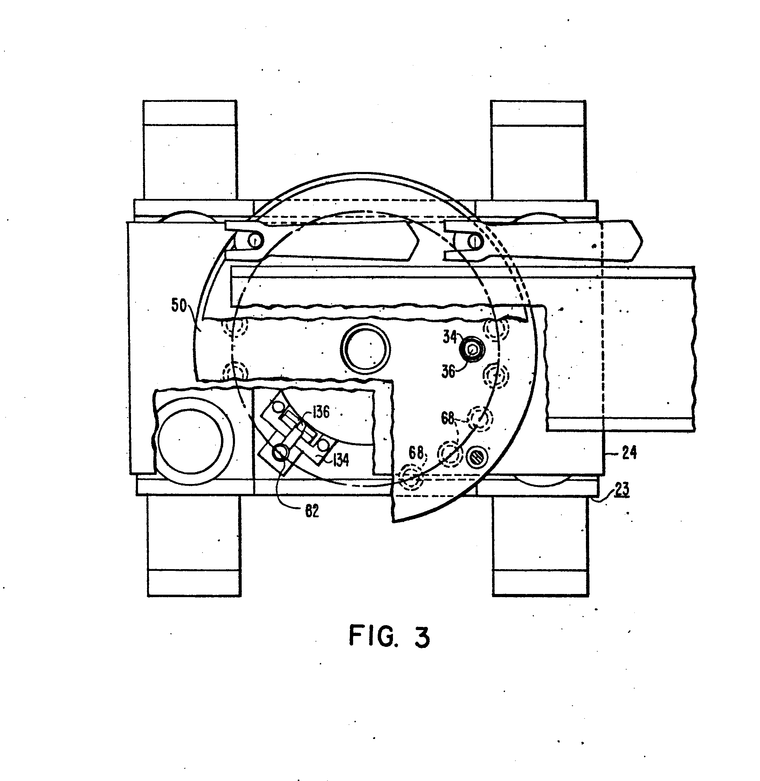

Thus, reference is made to Figures 2 and 3 which show the platform 24 mounted for guided vertical movement on the carriage 23. The platform is generally rectangular and defines an upper planar horizontal face 25 and a lower face 27. The platform has a central opening 28 with an upwardly open recessed peripheral shoulder 29. A hollow, generally cylindrical, collar member 30 is disposed within the opening 28 and defines an upper flange 32 for seating in the recessed shoulder 29 with the upper surface 34 thereof generally flush with the upper surface 25 of the platform and defining annular raised sealing rings 25a. The platform 24 and collar member 30 are secured together as through bolts 36 passing through the flange 32 and into the shoulder 29.

The internal diameter 38 of the cylinder 30 is enlarged at both the upper and lower ends thereof to seat within the notches 40, 42 thus provided, an upper bearing 44 and a lower bearing 46. A hollow shaft 48 extends through the collar member 30 in intimate contact with the inner raceways of the upper and lower bearings for rotation with respect to the platform 24. The upper end of the shaft 48 extends above the platform 24 and a circular, substantially planar plate member 50, having a central opening 52 sized to receive the shaft 48 therein is securely attached to the shaft, as by welding, with the upper surface of the tube substantially flush. The plate member 50 is maintained elevated above the platform 24 by a lip 54 extending downwardly from the underside of the plate member and peripherally about the central opening 52 to abut the upper surface of the inner raceway of bearing 44 for seating thereon and the underside also defines annular cavities 55 concentric with the annular rings 25a for receiving the rings therein to provide a labyrinth seal for the bearings.

The plate member 50 defines means of well-known construction for releasably attaching a tool holder arm thereto and also defines at least one aperture 56 therethrough at a radius common to the radius of the bolts 36 securing the cylinder 30 to the platform 24 for access to these bolts through the plate member 50. Also, the undersurface of the plate member has a plurality of generally equiangularly spaced downwardly open cavities 58 therein at a common radius. (To index the arm in either the extreme outwardly extending position and the extreme inwardly extending position, two such diametrically opposed cavities would be required; however, depending upon the desired indexed movement of the table, any number above these two cavities can be provided.) A bushing 60 having a conical internal wall 61 tapering outwardly downwardly is secured in each cavity 58 and provides a seating engagement with a conical-nosed indexing pin 62 projecting upwardly thereinto for accurately angularly positioning and securing the plate member 50 in a manner to be described.

A hollow stub shaft 64 is disposed within the lower end 66 of the shaft 48 to project downwardly therefrom. An upper gear ring 68, having external gear teeth 70 is secured to the stub shaft 64. The ring 68 is also secured to the shaft 48 by bolts 72 to retain the stub shaft 64 on the shaft 48. The stub shaft 64 also has a lower ring 74 also having external gear teeth 76 for a purpose to be described.

A motor-mounting subassembly 78 is attached to the lower end of the cylinder 30 for mounting a motor 80 (either air or electric-operated) in driving engagement with the plate member 50 through shaft assembly 64, 48. The mounting assembly 78 includes an upper annulus 82 secured, as by bolts 84, to the lower end of the cylinder 30 and having a central opening sufficiently large to freely pass over the outer diameter of the gear rings 70 and 76 of the stub shaft 64 and also encircles a bearing retaining collar 65 threadably secured to the lower end of shaft 48 and abutting the lower bearing 46. A pair of diametrically opposed vertically extending legs 86 (only one being shown) form an integral extension of the annulus and extend downwardly therefrom. A lower horizontal cross member 88 bridges the legs 86 at their lower end. The cross member 88 has a central opening 90 concentric with the hollow shafts 48, 64 and a pair of openings 92, 94 on opposite sides of the central opening 90. A reversible motor 80 is secured to the cross member 88 through a motor mounting collar 96 bolted to the bottom face of the cross member and the drive shaft 98 of the motor extends upwardly through one opening 92.

A coupling device, comprising a pair of opposed axially aligned members having axially extending, interengaging projections is mounted with one element 100 attached, as by a setscrew to the drive shaft 98 and the opposing element 102 secured to the lower face of a gear member 104. The gear member 104 is rotatably retained on a headed shaft 106 secured to the undersurface of the annulus 82. The external gear teeth 108 of the gear are in meshing engagement with the teeth 70 of the upper gear ring 68, to provide a driving engagement from the motor 80 to the lower shaft 64 and ultimately to the plate 50.

A precision potentiometer 114., to provide signaling means relating to the angular position of the plate member 50 is mounted in a depending position from the cross member 88 with the shaft 116 extending upwardly through the other aperture 94 therein. A gear 118 is secured to the shaft 116 in meshing engagement with the lower gear ring 74 on the stub shaft 64. The gear 118 is a spring-loaded split gear to prevent any play between the gear ring 74 and the gear 118 so the rotation of the shaft and plate member 50 can be accurately measured or determined by the precision potentiometer 114. (It is to be understood that the potentiometer 114 is electrically connected to the remote controls or automatic controlling device for position readout which is automatically compared to the desired position, and the motor 80 is driven in response thereto for positioning the table at the desired angle. The indexing pin 62 is then driven into the bushing 58. Such controls, although generally illustrated, form no part of this invention.)

An indexing pin assembly 120 is mounted to the undersurface 27 of the platform 24 and includes an upwardly projecting conical-nosed pin 62 projecting through an aperture 122 in the platform 24 for receipt in the tapered indexing bushings 60. The pin 62 is mounted on the upper end of a retractable plunger 124 which is actuated from a retracted position to the extended position shown by an air cylinder 130 mounted on a support 132 beneath the platform. The plunger 124 includes an intermediate member 134 adjustably secured thereon for mounting a tab member 136 which projects outwardly from the plunger 124 to contact either one or the other of a pair of stationarily supported microswitches 140, 142. The upper switch is contacted when the pin is in the proper seating engagement within the bushing and is electrically connected in the tool energizing circuit such that the tools cannot be energized unless the retractable plunger is in such proper position. The lower microswitch 142 is contacted by the tab member 136 only when the plunger is in a fully retracted position whereupon the table is free to be rotated. This switch is electrically connected in the table energizing circuit which will not be actuated until the switch is closed by the tab.

In that the gear drive for rotating the plate member 50 has necessary tolerances in its design and assembly, the angular position of the plate 50, although indicated by the precision potentiometer to be in proper position, can be in slight misalignment. And, because the tool is mounted on the end of the tool arm extending from the plate 50, the amount the plate is in misalignment from a precise position can result in an exaggeration of the misalignment of the tool to an unacceptable amount. Thus, the indexing mechanism just described permits the table member 50 to be positioned as accurately as possible from the drive motor 80 which, in all instances, will provide substantial alignment of the conical-nosed indexing pin 62 with an indexing bushing 60. However, for repeatable final positively accurate alignment of the tool, the air-driven plunger 124 forces the pin 62 into the bushing 60 and because of the tapered relationship, the plate will move in either direction to a position wherein the pin is properly seated within the bushing. The drive system backlash permits limited movement of the plate without resulting in any movement in the armature of the motor 80. The shaft 116 in the potentiometer is relatively free to turn and does not require any particular coupling to accommodate such backlash movement of the table.

Thus, forcing the indexing pin 62 into proper seating engagement with the bushing 60 accurately indexes the table member 50, and such is indicated by the projection 136 causing the microswitch 140 to permit energization of the tools.

It is to be noted that the hollow shaft 64, 48 permit the tool power lines or umbilical cords such as air, hydraulic, electrical, etc. to be passed therethrough from below the table 50 to above the table and thence along or parallel to the tool holding arm and generally free of any interference with any structure.

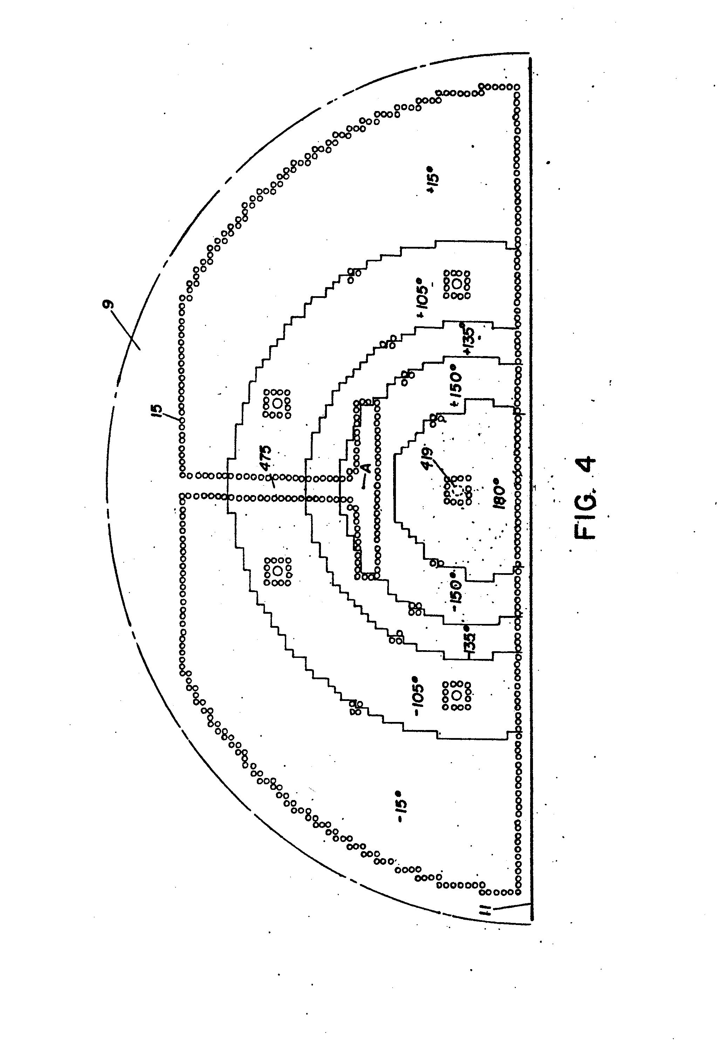

Figure 4 illustrates the semicircular array of holes in one-half of a typical tubesheet although only peripheral holes are shown for the sake of clarity. Each hole is identified as belonging to a row which extends horizontal to, and a column which extends vertically from, the divider plate 11. In a typical generator, there are 49 rows numbered from the divider plate out and 114 columns numbered from right to left as viewed in the figure. In the array shown, the holes in an inverted T-shaped area 475 are missing to accommodate for the arrangement of other equipment on the secondary side of the tubesheet. As also shown, the servicing machine is placed in the channel head with the vertical column 419 aligned with the 7th row between the 57th and 58th columns. By reference to Figures 1 and 4, it should be evident that a tool placed directly at the center of the carriage 23 cannot reach all of the holes in the array.

With the remote indexing of the tool arm provided by this invention, it is not necessary to align the tool arm with the manway in order to change angles. Also, with the increased number of secure angular positions for the tool arm, only one tool arm of one selected length is required to reach all of the holes for a given operation.

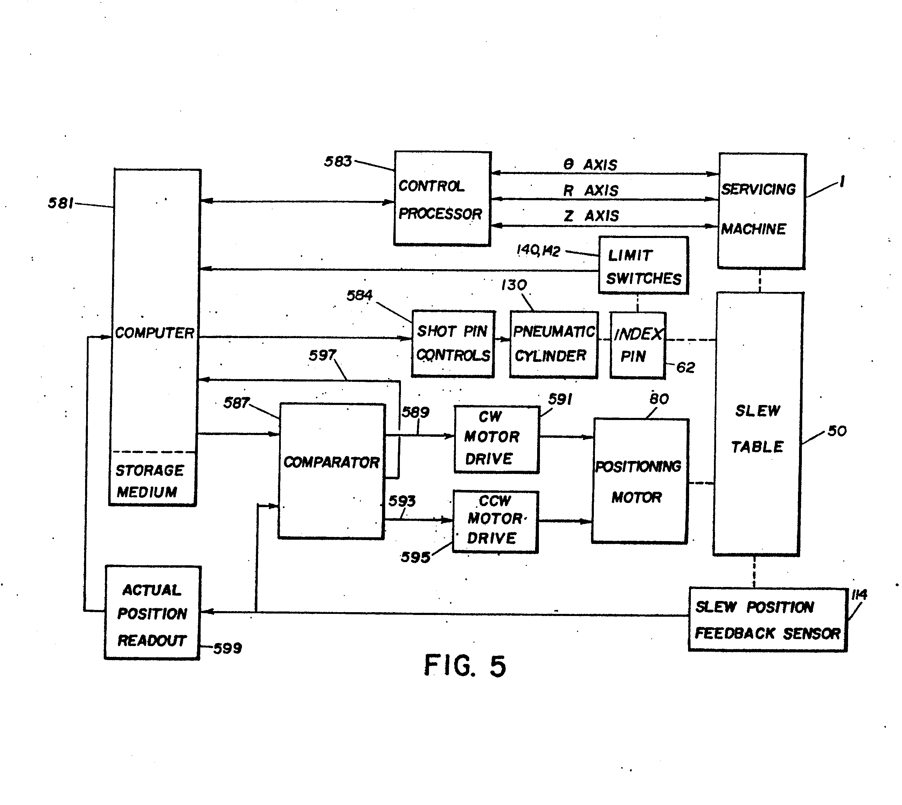

Figure 5 schematically illustrates in block diagram form the portion of the control system applicable to the invention. A full description of the control system for the servicing machine is disclosed in the above mentioned copending application Serial No. 952,431 filed on October 18, 1978. As described therein, the computer 81 sends command signals to the control processor 583 which in turn controls the servicing machine 1 by adjusting the angular position of the arm 22 (the    axis), the longitudinal position of the carriage 23 along the arm 22 (the R axis) and the height of the platform 24 above the carriage 23 (the Z axis).

When it is determined by the computer 581 in the manner discussed below that a change in the angular position of the slew table 50 is required, a signal is sent by the computer to the pin control 584 which operates the pneumatic cylinder 130 to retract the indexing pin 62, thereby freeing the slew table 50 for rotation. Full retraction of the pin 62 is reported back to the computer 581 by the switch 142 (Figure 2) which is one of the limit switches 140, 142. The computer then sends a command slew position signal representative of the desired angular position of the slew table to the comparator 587. This command slew position signal may be derived by the computer 581 from a storage medium as discussed below. The comparator 587 compares the command slew position signal with a signal generated by the slew position feedback sensor 114 representative of the actual position of the slew table 50. If the difference between the command slew position signal and the actual position signal is such as to require clockwise rotation of the slew plate 50, the comparator 587 generates a signal on line 589 which energizes clockwise motor drive circuit 591 to drive the slew motor 80 and hence the slew plate 50 in a clockwise direction. Similarly, in response to a counterclockwise signal from the comparator 587 on line 593, counterclockwise motor drive circuit 595 energizes the positioning motor 80 to drive the slew table 50 in a clockwise direction.

When the slew position error is reduced to zero, the indication that the slew table 50 has been slewed to the position commanded by the computer is relayed back to the computer 581 over line 597. The computer 581 then sends a signal to the shot pin control 584 which actuates the pneumatic cylinder 130 to seat the pin 62 and thereby lock the slew table in the new position. The computer 581 is notified of the seating of the pin 62 by the closing of switch 140 which is one of the limit switches. With the table locked in position, the computer 581 moves on to the next operation. As illustrated in Figure 5, the signal from the slew position feedback sensor 114 may be applied to an actual position indicator 599 which provides the operator with a visual indication of the actual angular position of the slew table. The actual position indication may also be fed back to the computer 581 as shown.

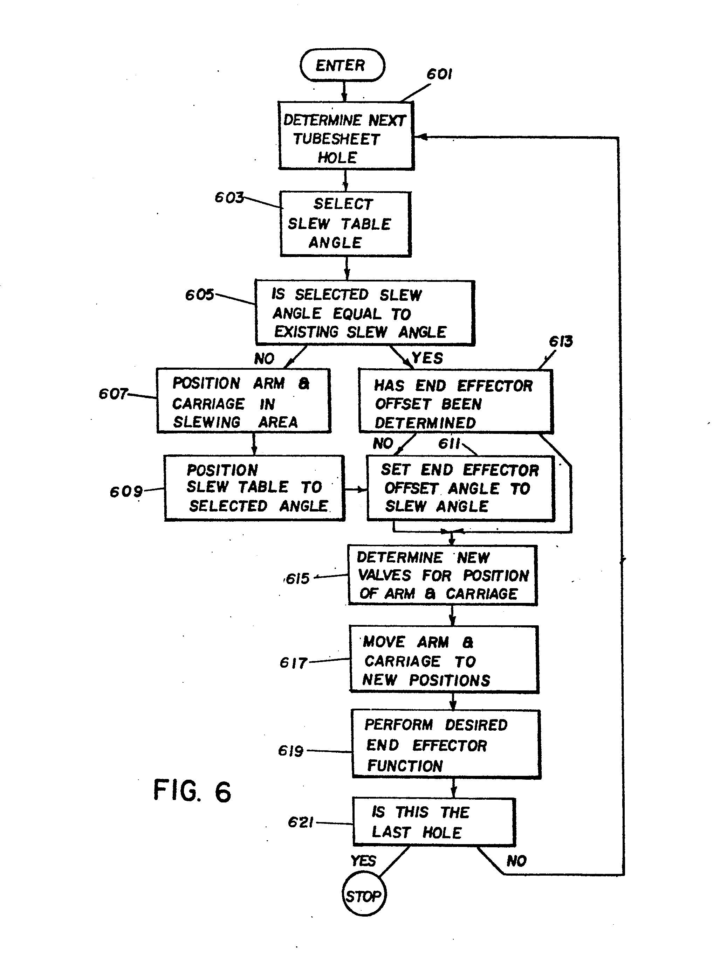

Figure 6 schematically illustrates operation of the system in accordance with one embodiment of the invention. After determining in block 601 the hole at which a desired operation is to be performed, the angle at which the slew table is to be set is detected in block 603. The manner in which the slew angle is selected will be discussed below. If the selected slew angle is different from the existing slew angle as determined in block 605, the arm 22 and carriage 23 are positioned to a slewing area as in block 607 where the slew table 50 can be rotated to the selected angular position without interference with components in the channel head of the generator. For simplicity, the axis of the slew table may be positioned at the point labeled A in Figure 4 where the slew table can be rotated to any desired angle. In this manner, only one turning area is required whatever change in the slew angle is required. With the slew table positioned in the turning area, the table is rotated to the selected angle in the manner discussed below, as indicated by block 609. As the table is being slewed, the offset of the tool created by the new slew angle is determined in block 611.

If the selected slew angle is equal to the existing slew angle as determined in block 605, a determination is made in block 613 whether the end effector or tool offset has been determined. Normally, where the slew angle remains the same, this would only have to be determined as in block 611 when the end effector was changed.

In any event, following determination of the proper end effector offset and regardless of whether the slew angle is changed or not, the position of the arm 22 and of the carriage 23 required to place the end effector under the selected hole taking into account the end effector offset are determined in block 615. The arm and carriage are then driven to those required positions as in block 617 and the desired end effector function is performed as in block 619. If this is the last hole on which the function is to be performed as determined in block 621, the procedure is completed. If not, the next hole is selected as in block 601 and the sequence is repeated until the desired end effector function has been performed at each of the designated holes in the array.

One method of selecting the slew table angle as indicated in block 603 of Figure 6 is to determine a preferred slew angle for each hole in the array and to store this information in a look-up-table in a storage medium such as a magnetic tape storage unit associated with the computer. A suitable selection of slew table angles for the hole array shown in Figure 4 is indicated by the angles superimposed on various regions of the array. Positive slew table angles on Figure 4 indicate clockwise rotation of the table from a reference line extending from the pivot axis outward through the center of the T-shaped area 475 and negative angles indicate counterclockwise rotation from this reference line. By using this selection of slew table angles, all of the holes in the array can be reached without changing the length of the slew table support arm.

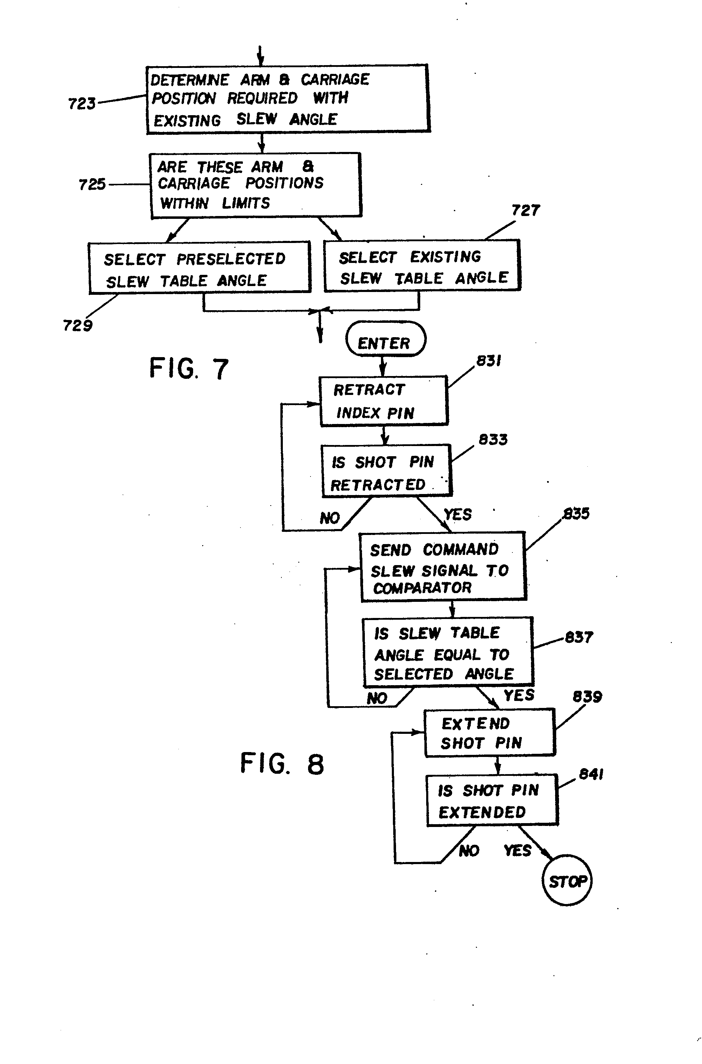

Another method of selecting the slew angle is illustrated schematically in the flow chart of Figure 7. According to this method, a determination is made in block 723 of the position required for the arm 22 and carriage 23 to place the end effector under the newly selected hole in the array using the existing slew table angle. If these positions are within the respective limits of travel for the arm and carriage as determined in block 725, the existing auto slew angle is selected for the slew table in block 727. However, if either the position determined in block 723 for the arm or the carriage is not within established limits, a preselected angle such as the angle in a look-up-table as discussed above, is selected in block 729. Accordingly, a change in the slew table angle is only made using this method if required.

The flow diagram of Figure 8 illustrates schematically the method by which the computer controls the change of the slew angle, which was indicated generally in block 609 of Figure 6. When a determination has been made to change the slew angle, the indexing pin is retracted as indicated in block 831, 833 of Figure 8. Retraction of the pin was described in detail in connection with the description of Figure 5 above. When the pin is retracted as indicated by the limit switch 142 (Figure 2), the computer 581 sends the command slew signal to the comparator 587 (Figure 5) as represented by block 835. When the slew table angle is equal to the selected angle, block 837, as reported by the comparator zero error signal on line 597 (Figure 5), the indexing pin is extended as in block 839 and when the pin is fully extended, block 841, as confirmed by the limit switch 140 (Figure 2), the procedure is completed.

14

What we claim is:

1. A remotely operated and monitored tool support and positioning apparatus for mounting below the tubesheet of a vertically standing nuclear steam generator, said apparatus supporting a tool holding arm comprising a platform supported on said tool holding arm and having an upper and a lower surface with an opening extending therethrough, characterized by a rotatable plate (50) supported on said platform (24) with a vertically oriented hollow shaft (48) extending downwardly through the opening (28) in said platform (24) and being rotatably supported within a collar (30) mounted on said platform (24), the lower surface of said plate (50) having a plurality of downwardly open cavities (58) evenly spaced along a circle whose center is the axis of rotation of said plate (50), drive means (68, 104, 80) for rotating said plate (50) and position sensing means (114) connected to said plate (50) and responsive to the rotation thereof for generating a signal relative to the angular position of said plate (50), indexing means including a movable pin (62) disposed within an aperture (122) in said platform (24) so as to be received in said cavities (58), means (130) for moving said pin (62) between a fully retracted position permitting rotation of said plate (50) and a fully protruding position for indexed seating within one of said cavities (58) to position said plate (50) in an exact angular position, and switches (140, 142) and means (136) for actuating said switches (140, 142) associated with said indexing pin (62) for operating said switches

15

(140, 142) to indicate the position of said movable pin (62).

2. An apparatus according to claim 1, wherein said drive means has a degree of backlash therein, characterized in that said indexing cavities (58) are conical with downwardly diverging walls and said movable pin (62) has a conical tip complementary to said cavities (58) so as to correct any misalignment of said plate (50) by said drive means when seating said pin (62) within said cavities (58).

3. An apparatus according to claim 2, characterized in that said drive means includes a reversible motor (80) mounted adjacent the lower end of said shaft (48) at one side thereof, said position sensing means (114) being arranged at the other side thereof opposite said motor (80) with service lines passing through the space therebetween and through said hollow shaft (48).

4. An apparatus according to claim 1, 2 or 3, characterized in that the lower surface of said plate (50) and the upper surface of said platform (24) are generally planar and have cooperating annular projections and grooves (22a) defining an annular labyrinth seal therebetween.

5. A method for operating an apparatus according to claims 1 to 4 wherein an end effector is mounted on the free end of the rotatable slew table cantilevered from the carriage, characterized by the steps of determining the angle that said cantilevered slew table must make relative to the carriage in order for said end effector to be positioned under a selected hole in the tubesheet, driving the rotatable arm and the carriage on the arm to a slewing area where said cantilevered slew table can be rotated without interference to said determined angle relative to the carriage, slewing the cantilevered slew table to said determined angular position; and driving the rotatable arm the carriage to the angular and longitudinal positions respectfully that place the end effector under the selected hole taking into account the offset of the slew table.

16

6. A method as claimed in claim 5, characterized in that prior to slewing the cantilevered slew table, said rotatable arm and carriage are driven to a slewing area at which said platform can be slewed to all possible angular positions thereof without interference.

7. A method as claimed in claim 5 or 6, characterized in that the step of determining the angle which said cantilevered slew table must make relative to the carriage comprises determining the angular position of the rotatable arm and the longitudinal position of the carriage along the rotatable arm required to locate the end effector carried by the slew table under the selected hole with the cantilevered slew table set at the existing angular position, comparing said determined positions of the rotatable arm and the carriage with predetermined limits therefor, selecting the existing angle of said cantilevered slew table as said selected angle when said determined positions of the rotatable arm and the carriage are within said predetermined limits, and selecting another angle for said cantilevered slew table when the determined positions of the arm and carriage are not within said limits.

8. A method as claimed in claim 7, characterized in that said step of selecting another angle comprises retrieving from a storage medium a preselected angle for said cantilevered slew table.

FIG. 1

FIG. 2

FIG. 3

FIG. 4

FIG. 5

```
                    ( ENTER )
                        │
                        ▼                601
              ┌──────────────────┐
              │  DETERMINE NEXT  │
              │    TUBESHEET     │◄──────────────────┐
              │      HOLE        │                   │
              └──────────────────┘                   │
                        │                            │
         603            ▼                            │
              ┌──────────────────┐                   │
              │     SELECT       │                   │
              │   SLEW TABLE     │                   │
              │     ANGLE        │                   │
              └──────────────────┘                   │
                        │                            │
         605            ▼                            │
              ┌──────────────────────┐               │
              │  IS SELECTED SLEW    │               │
              │   ANGLE EQUAL TO     │         613    │
              │  EXISTING SLEW ANGLE │               │
              └──────────────────────┘               │
              NO ╱              ╲ YES                 │
    607  ┌────────────────┐  ┌────────────────────┐   │
         │ POSITION ARM & │  │  HAS END EFFECTOR  │   │
         │  CARRIAGE  IN  │  │  OFFSET  BEEN      │   │
         │ SLEWING  AREA  │  │  DETERMINED        │   │
         └────────────────┘  └────────────────────┘   │
                 │           NO ╱      611             │
                 ▼         ┌────────────────────┐      │
    609  ┌────────────────┐│ SET END EFFECTOR   │      │
         │   POSITION     ││ OFFSET ANGLE TO    │      │
         │ SLEW TABLE TO  ├┤ SLEW ANGLE         │      │
         │ SELECTED ANGLE ││                    │      │
         └────────────────┘└────────────────────┘      │
                                    │                  │
                        ┌───────────────────────┐      │
                        │ DETERMINE  NEW        │      │
            615  ───────│ VALVES FOR POSITION   │      │
                        │ OF ARM & CARRIAGE     │      │
                        └───────────────────────┘      │
                                    │                  │
                        ┌───────────────────────┐      │
                        │  MOVE ARM &           │      │
            617  ───────│ CARRIAGE  TO          │      │
                        │ NEW POSITIONS         │      │
                        └───────────────────────┘      │
                                    │                  │
                        ┌───────────────────────┐      │
                        │ PERFORM  DESIRED      │      │
            619  ───────│ END EFFECTOR          │      │
                        │ FUNCTION              │      │
                        └───────────────────────┘      │
                                    │                  │
                        ┌───────────────────────┐      │
            621  ───────│ IS THIS THE           │      │
                        │ LAST HOLE             │      │
                        └───────────────────────┘      │
                      YES ╱              ╲ NO ──────────┘
                     (STOP)
```

FIG. 6

723 — DETERMINE ARM & CARRIAGE POSITION REQUIRED WITH EXISTING SLEW ANGLE

725 — ARE THESE ARM & CARRIAGE POSITIONS WITHIN LIMITS

SELECT PRESELECTED SLEW TABLE ANGLE

727 — SELECT EXISTING SLEW TABLE ANGLE

729

ENTER

**FIG. 7**

831 — RETRACT INDEX PIN

833 — IS SHOT PIN RETRACTED

NO          YES

835 — SEND COMMAND SLEW SIGNAL TO COMPARATOR

837 — IS SLEW TABLE ANGLE EQUAL TO SELECTED ANGLE

NO          YES

839 — EXTEND SHOT PIN

**FIG. 8**

841 — IS SHOT PIN EXTENDED

NO    YES

STOP

# EUROPEAN SEARCH REPORT

European Patent Office

## DOCUMENTS CONSIDERED TO BE RELEVANT

| Category | Citation of document with indication, where appropriate, of relevant passages | Relevant to claim |
|---|---|---|
| | US - A - 3 934 731 (O. MÜLLER et al.) | 1,5,6 |
| | * column 1, line 62 to column 2, line 33 * | |
| | & DE - B - 2 263 143 | |
| | & FR - A - 2 211 721 | |
| | & CH - A - 558 926 | |
| | --- | |
| | US - A - 3 277 789 (O.F. GRAHAM) | 1-4 |
| | * complete document * | |
| | --- | |
| | US - A - 2 956 454 (J.A. HANSEN) | 1-3 |
| | * column 6, line 1 to column 7, line 69 * | |
| | & CH - A - 371 938 | |
| | & GB - A - 890 368 | |
| | --- | |
| A | DE - A - 2 551 215 (MITSUBISHI JUKOGYO) | 7,8 |
| | * pages 19 and 20 * | |
| | ---- | |

## CLASSIFICATION OF THE APPLICATION (Int. Cl.³)

G 05 D 3/04//
G 21 C 17/00
G 21 D 5/08

## TECHNICAL FIELDS SEARCHED (Int.Cl.³)

B 23 Q 17/04
B 25 J 9/00
F 28 G 13/00
G 05 D 3/04
G 21 C 17/00
G 21 D 5/08

## CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

[X] The present search report has been drawn up for all claims

| Place of search | Date of completion of the search | Examiner |
|---|---|---|
| Berlin | 23-07-1979 | GESSNER |

EPO Form 1503.1 06.78